# EUROPEAN PATENT APPLICATION

(11) **EP 2 783 584 A1**
(43) Date of publication of application: **01.10.2014**
(21) Application number: 13461510.3
(22) Date of filing: 25.03.2013
(51) Int. Cl.: A23L 3/3418, A23L 3/3427, A23L 3/3436, A23L 3/3445, A23L 3/3571, A23B 4/16, A23B 4/20, A23B 7/148, A23B 7/154, B65D 81/26

(54) **Modifier of packaged food atmosphere**

(71) Applicant: Zachodniopomorski Uniwersytet Technologiczny w Szczecinie, 70-310 Szczecin (PL)
(72) Inventor: Bartkowiak, Artur, 71-667 Szczecin (PL); Lisiecki, S awomir, 72-006 Szczecin (PL); Mizieli ska, Ma gorzata, 70-556 Szczecin (PL); Czy o, Iwona, 73-200 Choszczno (PL); Mysiara, Anna, 70-360 Szczecin (PL)
(74) Representative: Zawadzka, Renata

(57) **Abstract**

A bioactive modifier of packaged food atmosphere, according to the present invention, containing yeast and nutrient for the yeast, which is characterized by that in contains 12 -25% by weight of a formulation containing 0.1-1 billions units/1 gram of bacteria *Lactobacillus plantarum,* 30-60% by weight of yeast, 2-20% by weight of sugar and 5-40% by weight of an activator of yeast and bacteria growth.

## Description

The present invention provides a bioactive modifier of packaged food atmosphere as a result of microbiological consumption of oxygen and the generation of carbon dioxide and ethanol. The bioactive modifier of atmosphere is in the form of composition, which allows for shelf life extension of packed food.

The application of ethanol and carbon dioxide as the antimicrobial agents has been well documented in the literature. This is particularly effective against moulds, but may also effectively inhibit the growth of yeast and bacteria. Ethanol can be sprayed directly onto the food products just before packaging. Several reports have demonstrated that the shelf life of food products such as the bakery products may be significantly prolonged after spraying with an aqueous solution with 95% fraction of ethanol obtaining the target concentration of 0.5-1.5% (g/g of dry matter) in the products. However, a more practical and safe way of ethanol generation is the preparation of special films and sachets containing the substances emitting ethanol. This type of solution also includes Ethicap, Antimold 102 and Negamold (Freund Industrial Co Ltd.), Oitech (Nippon Kayaku Ltd.), ET Pack (Ueno Seiyaku Ltd.) and Ageless type SE (Mitsubishi Gas Chemical Ltd.). All such films and sachets contain ethanol absorbed or immobilized in the substrate materials, what enables a controlled release of the ethanol vapours during the shelf life. From paper of Frankea I., Wijmaa E., Boumab K., Shelf life extension of pre-baked buns by an active packaging ethanol emitter, Food Additives and Contaminants, 19(3), 2002, 314-322 is known Ethicap, which is the most common ethanol emitter in Japan and is composed of ethanol (55%) and water (10%) absorbed on the silicon dioxide powder (35%) and located in a sachet made of cellulose-paper/polyvinyl acetate laminate (EVA). Additionally, achieved ethanol vapours generally exerted an anti-microbial effect. To mask the smell of alcohol, some sachets contained traces of vanilla or other fragrances. Another ethanol emitters such as for example, Negamould and Ageless SE are characterized by a double action of sachets, namely they simultaneously uptake oxygen and emit ethanol vapours. The selection of appropriate sachet depends on the weight, the water activity a_{w} of the food product and its required durability. When food is packed with the sachets emitting ethanol, moisture from the air is absorbed by the food, and the released ethanol diffuses into the gaseous phase of package interior and its partial dissolution proceeds. The application of ethanol emitters in the bakery products and confectionery has been known from publication Hebeda, R. E., Zobel, H. F., 1996, Baked Goods Freshness - Technology, Evaluation and Inhibition of Staling, Marcel Dekker, New York. The ethanol emitters were utilized to extend the shelf life of semi-dry and dry fish products as was indicated in publication Rooney, M. L. 1995, Active Food Packaging, Chapman & Hall, London. There have been also known the sachets (often performing the role of labels) emitting carbon dioxide and eliminating oxygen from packed food atmosphere. These sachets and labels usually contain iron carbonate and the metal halide catalysts. Such products provide the manufacturers like Mitsubishi Gas Chemical Ltd. ("Ageless" type G) and Multisorb Technologies Inc ("Freshpax" type M). Such type dual action sachets (oxygen scavenger /carbon dioxide emitter) known from publication Vermeiren L, Devlieghere F, van Beest M, de Kruijf N, Debevere J (1999) Developments in the active packaging of foods. Trends Food Sci Technol 10(3): 77-86 are used in the packaging for food products of the snack type, for example, nuts, biscuits. Additionally, the carbon dioxide emitters have found the application as the inhibitors of the growth of gram-negative bacteria or moulds, particularly in the case of such food products as: vegetable, fruits, meat and fish, as was disclosed in publication of Rodriguez-Aguilera, R.; Oliveira, J. C.; Review of Design Engineering Methods and Applications of Active and Modified Atmosphere Packaging Systems, Food Eng Rev (2009) 1:66-83.

Suenaga and others in publication Suenaga H, Yamaguchi T, Furuta M, Ohta S (1995) Test of Preservation of Raw Noodles or Sandwiches using Sugar-Resistant Yeasts. Nippon Shokuhin Kagaku kogaku Kaishi (in Japanese) 42:332-337 have reported attempts to use the yeast resistant to a high concentration of saccharose for the food preservation due to a microbiological consumption of oxygen and ethanol generation. In this case during the investigations was observed the inhibition of the growth *Aspergillus oryzae* and *E. coli* on a solid substrate, in which the yeasts were located, and the whole was closed in a tight packaging made from a highly barrier film. The studies were performed with the yeast strain S22, which grows and ferments in the presence of 40% glucose or 50% sucrose. From publication Yano, T. et al., Preservation of Raw Fish and Meat, Agricultural and Biological Chemistry, Vol.55, No.8(1991), 2063-2070 is known the addition of fermentation yeasts in order to preserve fresh fish and meat as an alternative to the salting. A modified atmosphere packaging MAP with biological active natural substances is known from publication Mastromatteo M.; Conte A.; Del Nobile M. A.; Combined Use of Modified Atmosphere Packaging and Natural Compounds for Food Preservation, Food Eng Rev (2010) 2:28-38.

The description of patent JP2002142739 reveals a protective sachet for packaged food, which contains yeast or yeast with a nutrient substance, water absorbent and odour absorbent. The sachet is made of film permeable for gases.

A bioactive modifier of packaged food atmosphere according to the invention, containing yeast and nutrient for the yeast is characterized by that, it contains 12-25 wt% of formulation containing 0.1-1 billion units/1 gram of lactobacillus, 30-60 wt% of yeast, 2-20 wt% of sugar and 5040 wt% of activator of the growth of yeast and bacteria (microorganisms).

The yeasts utilizing sucrose as a nutrient perform the alcoholic fermentation under the anaerobic conditions owing to which carbon dioxide and ethanol is generated - the substances with preservative action. Carbon dioxide exhibits the antibacterial features and fungostatic action. Ethanol is known to retard the growth of fungi, acts advantageously on the rheological properties of bakery, preventing its staling. The forming gases - carbon dioxide and ethanol displace oxygen from the atmosphere.

*Lactobacillus,* in turn, causes the inhibition of the growth of many pathogenic microorganisms and as a consequence, intensifies the effect of CO₂ action. Bacteria of the genus *Lactobacillus* exhibits a high affinity to the carbohydrate substrates and amino acids occurring in flour as well as antagonistic interaction in relation to other microorganisms competing for the same food sources. The antimicrobial properties of lactobacilli are associated with the synthesis of compounds retarding or limiting the growth of other microorganisms, which include the organic acids, hydrogen peroxide and bacteriocins. This effect is usually assisted by the displacement of oxygen, what additionally prevents the growth of moulds and other aerobic microorganisms. Although bacteria *Lactobacillus plantarum* inhibits the growth of yeast *Saccharomyces cerevisiaein* in an insignificant degree, its use is recommended with regard to a strong antagonism in relation to fecal bacteria *Escherichia coli* and *Enterococcus faecalis* as well as to clostridia spore *Bacillus subtilis* and *Bacillus cereus.* These bacteria strongly inhibit also the growth of moulds *Penicillium expansum* and *Fusarium oxysporum,* and in a slight degree, the growth of *Rhizopus nigricans.*

Water necessary for the action of bioactive modifier of atmosphere is derived from an activator of bacteria and moulds growth, which preferably has the form of a water absorbent originating from packaged food or a hydrogel in the form of 1-5% aqueous solution. In the case of hydrogel the percentage fraction refers to the total mass of hydrocolloid and the water in which is suspended.

Preferably the activator of yeast and bacteria growth comprises alginate and/or carrageenans and/or starch or its derivatives, and/or cellulose or its derivatives. When the activator has the form of water absorbent then the substances are in the dry state, if the activator has the form of hydrogel then it is an aqueous solution of the above-mentioned substances.

Preferably sugar comprises sucrose and/or glucose and/or maltose and/or lactose. Preferably yeast comprises *Saccharomyces cerevisiae* and/or *Saccharomyces carlsbergensis* and/or *Saccharomyces ellipsoideus.*

Preferably lactobacillus comprises *Lactobacillus sp,* preferably *Lactobacillus plantarum* and/or *Lactobacillus acidophilus* and/or *Lactobacillus delbrueckii* and/or *Lactobacillus rhamnosus* and/or *Lactobacillus fermentum.*

Preferably a composition contains lactobacillus with permissible admixture of *Bifidobacterium lactis.*

Preferably a composition of bioactive modifier of the atmosphere contains an odour absorbent in the amount of up to 50 % by weight, which allows to overcome a perceptible odour of ethanol and yeast in the package. The odour absorbent preferably has the form of the activated carbon and/or zeolites and/or sodium bentonite.

A modifying composition (bioactive atmosphere modifier) is placed in the package, for example, in a sachet, which is a barrier for the composition components, whereas it is permeable to the products generated by the composition components. The application of bioactive atmosphere modifier composition in the amount of 0.2-2 wt% in relation to the food product weight ensures a sufficient increase of volume of the gas mixture in the package sufficient to prolong the shelf life of this product. The composition of bioactive atmosphere modifier may be used for each packaged food, for which the application of atmosphere modifiers is advisable, for example, bakery products, fish or meat.

An advantage of this solution is that the generation of modifying atmosphere (MAP) proceeds in a natural way owing to the application of a bioactive composition. Due to the application of composition decreases the content of oxygen in the atmosphere of packaged food. The application of lactic acid bacteria in the bioactive atmosphere modifier intensifies the effect of CO₂ action owing to the inhibition of growth of pathogenic bacteria. The application of lactic acid bacteria allows to achieve a large volume of generated gases modifying the atmosphere (MAP) in relation to the composition known in the art, containing only the yeasts and sugars. Moreover, bacteria provide the compounds that inhibit or restrict the growth of other microorganisms, which include the organic acids, hydrogen peroxide and others. A solution according to this invention allows for a 2-4.5-fold increase in volume of the gas mixture in relation to the solutions without bacteria in the composition. A solution according to the invention allows to achieve the carbon dioxide content in a hermetically sealed barrier package at a level of about 66-76 wt%. The application of mixture according to the invention closed for example, in a sachet allows to decrease the oxygen content to a level of about 2.5-3.0 wt%. A food product packaged in a bag made of film constituting a barrier for gases generated by the microorganisms contained in the composition, owing to a gradual modification of the atmosphere inside the package are characterized by a longer shelf life than that stored under the conditions without a modifier. The application of modifier of the atmosphere in a package extends the shelf life period without visible microbiological changes.

The invention is further presented in the following examples of realization.

### Example I

A composition of bioactive atmosphere modifier is obtained from bakery yeasts *Saccharomyces cerevisiae* instant in the amount of 3 g, probiotic formulation Lacium (Natur Produkt Zdrovit Sp. z o.o.) containing in one capsule about 0.4g - 1.00 · 10⁹ units of bacteria *Lactobacillus plantarum* in the amount of 1.2 g; sugar in the form of powdered sucrose in the amount of 0.23 g. A dry alginate in the amount of 0.6 g is used as an activator of yeast and bacteria growth. All the components are mixed in the dry state. After mixing the composition in the dry state constitutes the filling of a sachet or a separate part of the package realized in such a way as to enable a free movement of water vapour and gases and vapours generated by the composition.

This amount of the composition allows to generate inside the package with the average gas permeability (70 cm³/m² 24h or lower), a volume of about 70 cm³ of the modifying atmosphere containing up to 70 wt% of carbon dioxide with a small admixture of 1.5 wt% of volatile ethanol, limiting the amounts of oxygen to 2% by weight.

A lack of odour absorbent in the composition will result in odour intrinsic to the fermentation.

### Example II

A solution performed in the same manner as in Example I, wherein the odour absorber in the form of activated carbon in the amount of 5 g was additionally introduced to a composition with the alginate content reduced to a level of 0.5 g. All the components are mixed. After mixing the composition in the dry state constitutes the filling of a sachet or a separate part of the package made in such a way as to enable a free movement of water vapour and gases and vapours generated by the composition.

This amount of the composition allows to generate inside the package with the average gas permeability a volume of about 65 cm³ of the modifying atmosphere containing up to 70 wt% of carbon dioxide with a small admixture of 1.5 wt% of volatile ethanol, limiting the amounts of oxygen to 2% by weight.

The odour absorbent present in the composition causes a reduction of perceptible odour intrinsic to the fermentation.

### Example III

A composition of bioactive atmosphere modifier is obtained from yeasts *Saccharomyces cerevisiae, Saccharomyces carlsbergensis, Saccharomyces ellipsoideus* instant in the amount of 1 g of each strain (3 g total), probiotic formulation Lacium containing in one capsule (about 0.4 g) - 1.00 · 10⁹ units of bacteria *Lactobacillus plantarum* in the amount of 1.2 g. Sugar is used in the form of powdered sucrose in the amount of 0.23 g. A dry carrageenan (water absorber) in the amount of 3 g is used as an activator of yeast and bacteria growth in the amount of 0.6 g. All the components are mixed. After mixing the composition in the dry state comprises the filling of a sachet or a separate part of the package made in such a way as to enable a free movement of water vapour and gases and vapours generated by the composition.

This amount of the composition allows to generate inside the package with a low gas permeability (PE with a thickness of 40 mm) a volume of about 60 cm³ of the modifying atmosphere containing up to 60 wt% of carbon dioxide with a small admixture of 1.5 wt% of volatile ethanol, limiting the amounts of oxygen to 4% by weight.

A lack of odour absorbent in the composition causes that odour intrinsic to the fermentation is perceptible in the package.

### Example IV

A solution performed in the same manner as in Example III, wherein the odour absorber in the form of a mixture of activated carbon, zeolite and bentonite in the weight ratio 1:1:1 in the amount of 2.5 g was additionally introduced to a composition. All the components are mixed. After mixing the composition in the dry state comprises the filling of a sachet or a separate part of the package made in such a way as to enable a free movement of water vapour and gases and vapours generated by the composition.

This amount of the composition allows to generate inside the package with the average gas permeability (PE with a thickness of 40 mm) a volume of about 50 cm³ of the modifying atmosphere containing up to 60 wt% of carbon dioxide with a small admixture of 1% by weight of volatile ethanol, limiting the amounts of oxygen to 4% by weight.

The odour absorbent present in the composition causes a reduction of perceptible odour intrinsic to the fermentation.

### Example V

A composition of bioactive atmosphere modifier is obtained from bakery yeasts *Saccharomyces cerevisiae* instant in the amount of 3 g, probiotic formulation Lacium containing in one capsule (0.4g) - 1.00 · 10⁹ units of bacteria *Lactobacillus plantarum* in the amount of 0.2 g with the addition of 0.375g *Lactobacillus acidophilus,* 0.25g *Lactobacillus delbrueckii subsp. bulgaricus,* 0.375g *Bifidobacterium lactis;* sugar in the form of the powdered mixture - 0.5 g glucose, 0.25 g maltose, 0.25 g lactose. A modified starch in the dry state (water absorber) in the amount of 1.3 g is used as an activator of yeast and bacteria growth. All the components are mixed. After mixing the composition in the dry state comprises the filling of a sachet or a separate part of the package made in such a way as to enable a free movement of water vapour and gases and vapours generated by the composition.

This amount of the composition allows to generate inside the package with the average gas permeability a volume of about 85 cm³ of the modifying atmosphere containing up to 60% by weight of carbon dioxide with a small admixture of 1.5% by weight of volatile ethanol, limiting the amounts of oxygen to 2% by weight.

A lack of odour absorbent in the composition will result in odour intrinsic to the fermentation.

### Example VI

A solution performed in the same manner as in Example V, wherein the odour absorber in the form of a mixture of zeolite and bentonite in the weight ratio 1:1 in the amount of 3.5 g was additionally introduced to a composition. All the components are mixed. After mixing the composition in the dry state comprises the filling of a sachet or a separate part of the package made in such a way as to enable a free movement of water vapour and gases and vapours generated by the composition.

This amount of the composition allows to generate inside the package with the average gas permeability a volume of about 80 cm³ of the modifying atmosphere containing up to 70% by weight of carbon dioxide with a small admixture of 1.5% by weight of volatile ethanol, limiting the amounts of oxygen to 2% by weight.

The odour absorbent present in the composition causes a reduction of perceptible odour intrinsic to the fermentation.

### Example VII

A solution performed in the same manner as in Example I, wherein the odour absorber was replaced in the composition by an activator of yeast and bacteria growth in the form of hydrogel in the form of 5% starch gruel in the amount of 1.5 g, whereas the amount of sugar was increased to 1.4 g. All the components are mixed. At the moment of activation the hydrogel (supplying water) is added to the composition. The dry composition may be located in a separate part of the package and the hydrogel in another part. Eventually made mixture of dry components and hydrogel is introduced into a package chamber or into a sachet in the package, which is permeable to the water vapour and gases and vapours generated by the composition.

This amount of the composition allows to generate inside the package with the average gas permeability a volume of about 110 cm³ of the modifying atmosphere containing up to 70% by weight of carbon dioxide with a small admixture of 1.5% by weight of volatile ethanol, limiting the amounts of oxygen to 2% by weight.

### Example VIII

A solution performed in the same manner as in Example II wherein an activator in the form of hydrogel in the form of 5% starch gruel in the amount of 1.5 g was additionally introduced to a composition, and the amount of sugar was increased to 1.4 g, whereas the amount of odour absorber was reduced to 3 g. The dry components are mixed. At the moment of activation the hydrogel (supplying water) is added to the composition. The dry composition may be located in a separate part of the package and the hydrogel in another part. Eventually mixture of dry components and hydrogel is introduced into a package chamber or into a sachet in the package, which is permeable to the water vapour and gases and vapours generated by the composition.

This amount of the composition allows to generate inside the package with the average gas permeability a volume of about 100 cm³ of the modifying atmosphere containing up to 75% by weight of carbon dioxide with a small admixture of 1.5% by weight of volatile ethanol, limiting the amounts of oxygen to 2% by weight.

The odour absorbent present in the composition results in a reduction of perceptible odour intrinsic to the fermentation.

## Claims

1. A bioactive modifier of packaged food atmosphere containing yeast and nutrient for the yeast, **wherein** said modifier contains 12 -25% by weight of a formulation containing 0.1-1 billions units/1 gram of bacteria *Lactobacillus plantarum,* 30-60% by weight of yeast, 2-20% by weight of sugar and 5-40% by weight of an activator of yeast and bacteria growth.

2. A bioactive modifier according to claim 1, **wherein** said activator of yeast and bacteria growth comprises a hydrogel in the form of a 1-5% aqueous solution.

3. A bioactive modifier according to claim 1 or to claim 2, **wherein** said activator of yeast and bacteria growth comprises alginate and/or carrageenan and/or starch or its derivatives and/or cellulose or its derivatives.

4. A bioactive modifier according to claim 1, **wherein** sugar comprises sucrose and/or glucose and/or maltose and/or lactose.

5. A bioactive modifier according to claim 1, **wherein** yeast comprises *Saccharomyces cerevisiae* i/lub *Saccharomyces carlsbergensis* and/or *Saccharomyces ellipsoideus.*

6. A bioactive modifier according to claim 1, **wherein** bacteria *Lactobacillus plantarum* comprises *Lactobacillus sp,* in particular *Lactobacillus plantarum* and/or *Lactobacillus. acidophilus* and/or *Lactobacillus. delbrueckii* and/or *Lactobacillus rhamnosus* and/or *Lactobacillus fermentum.*

7. A bioactive modifier according to claim 1, **wherein** said modifier contains bacteria *Lactobacillus plantarum* with a permissible admixture of *Bifidobacterium lactis.*

8. A bioactive modifier according to claim 1, **wherein** said modifier contains an odour absorber in the amount of up to 50% by weight.

9. A bioactive modifier according to claim 1, **wherein** said odour absorber has the form of activated carbon and/or zeolite and/or sodium bentonite.
